# EUROPÄISCHE PATENTSCHRIFT

(11) **EP 1 456 073 B1**
(45) Veröffentlichungstag und Bekanntmachung des Hinweises auf die Patenterteilung: **01.09.2010**
(21) Anmeldenummer: 02792988.4
(22) Anmeldetag: 12.12.2002
(51) Int. Cl.: B61L 27/04

(54) **DEZENTRALES SYSTEM ZUR VOLLAUTOMATISCHEN DURCHFÜHRUNG VON TRANSPORTDIENSTLEISTUNGEN**
DECENTRALIZED SYSTEM FOR ENTIRELY AUTOMATIC EXECUTION OF TRANSPORT SERVICES
SYSTEME DECENTRALISE DESTINE A L'EXECUTION ENTIEREMENT AUTOMATIQUE DE SERVICES DE TRANSPORT

(30) Priorität: 12.12.2001 DE 10162117
(43) Veröffentlichungstag der Anmeldung: 15.09.2004
(73) Patentinhaber: CargoCap GmbH, 44801 Bochum (DE)
(72) Erfinder: STEIN, Dietrich, 44892 Bochum (DE)
(74) Vertreter: Bergmann, Jürgen
(86) Internationale Anmeldenummer: PCT/EP2002/014168
(87) Internationale Veröffentlichungsnummer: WO 2003/049985

(56) Entgegenhaltungen:
- EP-A- 0 642 967
- EP-A- 0 721 872
- DE-A- 3 434 268
- DE-A- 3 528 235
- US-A- 3 403 634
- US-A- 4 554 873

## Beschreibung

Die Erfindung betrifft ein System zur vollautomatischen Durchführung von Transportdienstleistungen, bei dem zwischen einer Sendestation und mindestens einer weiteren Empfangsstation in einem Transportnetz stückartige Güter durch Transportfahrzeuge bewegt werden, wobei die Transportfahrzeuge fahrerlos und leitungsgeführt sind.

Um auf schnelle, kostengünstige, personalsparende und umweltschonende Weise Güter zu transportieren, ist aus der US-Patentschrift 5 720 363 bekannt, ein Zentrallager mit Empfangsstationen, wie etwa Haushalte oder Büros, über ein Untergrundnetz zu verbinden. Diese Lösung zeichnet sich insbesondere durch einen stark zentralisierten Ansatz aus: zum einen durch den Betrieb eines Zentrallagers als zentralen Versendeknoten des Transportnetzwerkes, zum anderen durch eine stark zentralisierte Informationsverarbeitung, die die Steuerfunktionen für den Verkehr der fahrerlosen Transportfahrzeuge übernimmt und ferner die Verteilungslogistik von Gütern aus dem Zentrallager in die entfernten Empfängerstationen durchführt.

Es treten hierdurch zum einen Steuerungs- und informationstechnologische Probleme auf, zum anderen ist die Hinzufügung von weiteren Versendestationen mit hohem Aufwand verbunden und die Nutzung des Transportnetzwerkes nicht effizient.

Die Probleme für die Verkehrssteuerung und Informationsverarbeitung treten beispielsweise zu Tage bei der Skalierung des Systems, also wenn das Transportnetz mit einer wachsenden Anzahl von Transportfahrzeugen beschickt wird, eine wachsende Anzahl von Empfängerstationen hinzutritt oder wenn das Transportnetz dahingehend erweitert wird, daß eine Vielzahl neuer Verzweigungsmöglichkeiten im Transportnetz hinzukommen. Hier muß für jede Hinzufügung an den drei Komponenten Transportnetz, Transportfahrzeug und Empfängerstation in den Zentralinformationsverarbeitungsmitteln für Steuerung und Logistik ausreichend Rechenkapazität und eine stets fehlerfreie Funktion des Zentralsystems garantiert werden. Eine derartige Konzentration von Rechenkapazität ist nicht nur wegen der hohen Anforderung an die Zuverlässigkeit besonders kostenaufwendig, sondern auch, weil für die zentrale Datenverarbeitung die benötigten Daten aus Transportnetz, Transportfahrzeugen und Empfängerstationen in sehr hohem Detailgrad an die zentrale Informationsverarbeitung übermittelt werden muß.

Bedingt durch die Zentralstruktur ist ebenfalls ein hoher Aufwand erforderlich, wenn das Transportnetz durch einen zweiten Anbieter mit Gütern beschickt werden soll, die zu den Empfangsstationen gelangen sollen. Solche weiteren Anbieter stehen stets in starker technischer und organisatorischer Abhängigkeit zum Betreiber des zentralen Steuerungssystems.

Weiteres Merkmal des bestehenden Systems ist, daß die Transportfahrzeuge nur auf ihrem Weg vom Zentrallager in die entfernten Empfangsstationen Fracht tragen und leer zum Zentrallager zurückkehren, so daß die Hälfte aller Fahrten Leerfahrten sind und sich daraus eine suboptimale Netzausnutzung bezüglich der Transportkapazität ergibt und der Anwendungsbereich des Systems stark eingeschränkt ist auf die Distribution von Gütern von einem Zentralknoten in entfernte Empfängerknoten.

Die DE 3434268 A1 beschreibt ein Verfahren zur dezentralen Steuerung von Fahrzeugen insbesondere in fahrerlosen Transportsystemen, das ohne übergeordnete Zentrale einen vollautomatischen Betrieb im gesamten Streckenbereich ermöglicht. Dies wird dadurch erreicht, daß die Fahrzeuge mit Daten über Ziele und Ladegut versehen, dann gestartet, an einer Zielstation angehalten, in Abhängigkeit vom Ladegut nacheinander Befehle gespeicherter Befehlsfolgen auf das Fahrzeug übertragen, dort ausgeführt und quittiert werden, und nach Setzen einer neuen Zieladresse erneut gestartet werden. Die Fahrzeuge fahren somit im fremdgesteuerten Betrieb.

Die EP 0 958 987 A2 beschreibt ein Verfahren zum Betrieb von Schienenfahrzeugen sowie Zugsteuerzentrale und Fahrzeuggerät hierfür. Es wird dort ein System beschrieben zum Einhalten eines relativen Bremswegabstandes zwischen zwei aufeinanderfolgenden Schienenfahrzeugen.

In "Signal+Draht (92) 3/2000, Tetzlaff Verlag, Hamburg, XP-00 22 62 020" wird ein Agent zur Durchführung von Fahrten im Schienenverkehr beschrieben, der Fahrabschnitte im Schienenverkehr so reserviert, dass die einzelnen Fahrzeuge zu jeder Zeit nur von maximal einem Fahrzeug belegt werden.

Aufgabe der vorliegenden Erfindung ist also, ein System zur Durchführung von Transportdienstleistungen in einem leitungsgeführten Transportnetz anzugeben, das kostengünstig und technisch aufwandsarm erweiterbar ist, etwa durch die Hinzufügung weiterer Transport fahrzeuge, Versende- oder Empfangsstationen, oder Vergrößerung des räumlichen Dienstleistungsbereichs des Transportsystems. Ferner ist Aufgabe der Erfindung, das Transportnetz möglichst effizient auszunutzen, d.h. Leerfahrten zu minimieren, einen robusten Betrieb zu gewährleisten und weiters für eine möglichst große Anzahl von Güterversende- und -empfangsszenarien flexibel einsetzbar zu sein.

Diese Aufgabe wird erfindungsgemäß durch das System nach dem Hauptanspruch gelöst. Vorteilhafte Weiterbildungen dieses Systems ergeben sich aus den Unteransprüchen.

Dadurch, daß die Informationsverarbeitungsmittel von dezentraler Systemarchitektur sind, wird es ermöglicht, die Funktionen, die durch die Informationsverarbeitungsmittel zur Verfügung gestellt werden, auf verschiedene Subsysteme, die verschiedenartig und räumlich verteilt sein können, zu verteilen. Es kann auf diese Weise technisch aufwandsarm weitere Rechenkapazität hinzugefügt werden sowie neue Systemkomponenten. Das auf Transportnetz, Transportfahrzeuge, Sende- und Empfangsstationen und die Depots verteilte Automatisierungs- und Informationssystem zeigt diesen Vorteil besonders deutlich bei der Skalierung des Transportsystems durch Hinzufügung oder Entnahme von Transportfahrzeugen zum bzw. aus dem System.

Ein weiterer Vorteil der Verteiltheit des dezentralen Informationsverarbeitungssystems tritt besonders offen zu Tage beim gleichzeitigen Einsatz mehrerer Transportfahrzeuge im System, da das oder die zu den Informationsverarbeitungsmitteln gehörenden Subsysteme, die im Transportfahrzeug befindlich sind, vielfach vorhanden sind, also durch die Redundanz die Ausfallsicherheit der Gesamtheit der Transportfahrzeuge und somit des gesamten Systems zur Durchführung von Transportdienstleistungen deutlich verbessert wird.

Dadurch, daß in Transportnetz, Transportfahrzeug, Sende- und Empfangsstation und Depot jeweils Informationsübertragungsmittel vorgesehen sind, können sowohl die stationären als auch die mobilen Komponenten des Transportdienstleistungssystems auf eine dem jeweiligen Szenario angemessene Weise, leitungsgebunden oder drahtlos, kommunizieren. Es können so die verschiedenen Subsysteme des dezentralen Informationsverarbeitungssystems miteinander in Kontakt treten und es wird den Bedienern, bzw. solchen Bedienern, die von einem entsprechenden Sicherheits- und Rechtevergabesubsystem dazu autorisiert wurden, ermöglicht, mit dem System in Interaktion zu treten.

Dadurch, daß jede Station sowohl Mittel zum Senden von Gütern als auch Mittel zum Empfangen von Gütern aufweist, und die dort befindlichen Automatisierungs- und Informationssysteme entsprechende Sende- und Empfangsfunktionen bereitstellen, kann Gütertransport zwischen je zwei beliebigen Stationen vorgenommen werden, wodurch das Transportsystem für alle teilnehmenden Stationen gleichermaßen für Versand und Empfang einsetzbar ist und Leerfahrten weitestgehend vermieden werden, wobei auch die Anzahl benötigter Transportfahrzeuge für ein gegebenes Transportaufkommen deutlich reduziert wird.

Dadurch, daß mindestens ein Depot zur Aufnahme von Transportfahrzeugen vorhanden ist, wobei ein solches Depot weitestgehend analog zu den im Transportnetz vorhandenen Stationen aufgebaut ist, können Transportfahrzeuge gespeichert und bedarfsweise gewartet oder repariert werden. Die Depots können dabei eine im Vergleich zu den Sende- und Empfangsstationen komplexere Substruktur zur Speicherung von Kapseln aufweisen und definierte Plätze für Wartungs- und Reparaturarbeiten. Ferner können die Depots Einrichtungen der rechnergestützten Automatisierungs- und Informationstechnik für Aufgaben der Steuerung, Datenverarbeitung sowie zur Durchführung sowohl einer stationären Bedienerkommunikation mit ruhenden Transportfahrzeugen als auch einer ereignisgebundenen lokalen Mobilkommunikation mit durchfließenden Transportfahrzeugen.

Dadurch, daß das oder die Transportfahrzeuge eine Vorrichtung zur Ladungsaufnahme aufweist, Sensorik und Aktorik und Individualfortbewegungsmittel enthält, wird es ermöglicht, das Transportfahrzeug als eigenständige Transporteinheit zu betreiben und so die Transportfahrzeuge sowohl im Konvoi als auch individuell im Transportnetz einzusetzen; dies steht besonders im Unterschied zu solchen Transportsystemen, bei denen ein Antriebsfahrzeug zieht oder schiebt und deswegen ein anderer Betrieb als in Form eines Zuges nicht vorgesehen ist.

Da die Transportfahrzeuge mit Mitteln ausgestattet sind, die die Steuerungen des Fahrzeugs, die Speicherung und Verarbeitung von Daten und die Kommunikation mit anderen Teilen des Transportdienstleistungssystems oder einem Bediener ermöglichen, kann das Transportfahrzeug als eigenständiges mobiles Subsystem agieren. Da die Informationsverarbeitungsmittel an Bord des Fahrzeuges so ausgestaltet sind, daß die Steuerkontrolle durch das Fahrzeug selbst realisiert ist und Anfragen und Ereignisse von außen durch die Steuerlogik des Transportfahrzeuges selbst, quasi "eigenverantwortlich", bearbeitet werden, stellen die Transportfahrzeuge sich selbst steuernde Subsysteme im Sinne mobiler Agentensysteme dar. Es wird damit der Rechen- und Kommunikationsaufwand zur Steuerung der Transportfahrzeuge insgesamt bestmöglich, nämlich auf die einzelnen Transportfahrzeuge, verteilt. Dafür ist weiter von Vorteil, dass die Transportfahrzeuge, bzw. die darin enthaltenen Informationsverarbeitungsmittel zur eigenständigen Selbststeuerung, mit solchen Mitteln ausgestattet sind, die die Bestimmung der aktuellen Verkehrssituation an Transportfahrzeugen vorsehen und davon abhängig das Transportfahrzeug steuern.

Zur Bestimmung der aktuellen Verkehrssituation durch die Transportfahrzeuge selbst ist es vorteilhaft, im Transportfahrzeug Mittel zur eigenständigen fortlaufenden Positionsbestimmung vorzusehen und ferner die Fahrzeuge mit Mitteln auszustatten, mit weiteren Transportfahrzeugen in Kommunikation zu treten, wobei sich im gesamten Transportdienstleistungssystem für die Kommunikation zwischen und mit mobilen Einheiten wie Transportfahrzeugen besonders leitungsfreie Medien eignen, die etwa auf Funk- oder Infrarottechnologie beruhen. Sofern es günstig erscheint, kann die Kommunikation zwischen Transportfahrzeug und autorisiertem Bediener im Ruhezustand des Transportfahrzeuges auch leitungsgebunden erfolgen.

Werden die im Transportfahrzeug enthaltenen Informationsverarbeitungsmittel so implementiert, daß das durch die Informationsverarbeitungsmittel dargestellte Steuerungsverhalten sich auf veränderte Situationen der Fahrzeugumwelt dynamisch anpassen kann, können die im Transportfahrzeug enthaltenen Informationsverarbeitungsmittel das Steuerungsverhalten des Transportfahrzeuges zunehmend verfeinern und verbessern bezüglich der Anforderungen, die im praktischen Betrieb des Transportdienstleistungssystems entstehen. Es findet ein Lernprozeß im Sinne der künstlichen Intelligenz statt, der in Verbindung mit dem zuvor genannten Transportfahrzeug als sich selbst steuerndes, mobiles Agentensystem das Transportfahrzeug zu einem intelligenten mobilen Agenten werden läßt. Ein vorteilhafte Weiterbildung stellt die analoge Anwendung der verteilten künstlichen Intelligenz auf logistische Funktionen dar.

Mit Blick auf eine optimale Einstellung der Verkehrsdichte unter Effizienz- und Sicherheitsgesichtspunkten ist es vorteilhaft, in den Transportfahrzeugen bzw, in den im Transportfahrzeug enthaltenen Informationsverarbeitungsmittel Mittel vorzusehen, die die Geschwindigkeit des Transportfahrzeuges auf eine globale, d.h. für alle Transportfahrzeuge des Transportdienstleistungssystems gleiche, vorgegebene Sollgeschwindigkeit anzupassen und/oder die Individualgeschwindigkeit des Transportfahrzeuges so zu regeln, daß ein Mindestabstand zwischen zwei Transportfahrzeugen nicht unterschritten wird. Für die Bestimmung dieses Mindestabstandes ist es vorteilhaft, in den Informationsverarbeitungsmitteln des Transportdienstleistungssystems Mittel vorzusehen, diesen Mindestabstand zwischen zwei Transportfahrzeugen in Abhängigkeit von der globalen Sollgeschwindigkeit zu bestimmen. Hierdurch können beispielsweise dynamisch Konvois aus Transportfahrzeugen gebildet werden und wieder in Individualverkehr aufgelöst werden, was sich vorteilhaft auf die zu erreichende Verkehrsdichte auswirkt und gleichzeitig die Verkehrssicherheit erhöht. Da jedes Transportfahrzeug mit diesen Geschwindigkeitsanpassungmitteln selbständig in der Lage ist, seine Geschwindigkeit einer vorgegebenen Sollgeschwindigkeit anzupassen, können anstelle einer globalen Sollgeschwindigkeit im Transportdienstleistungssystem auch für individuelle Transportfahrzeuge und/oder Transportfahrzeuggruppen spezifische Sollgeschwindigkeiten gleichzeitig vorgegeben werden.

Dadurch, daß die Stationen, die sowohl Mittel zum Senden als auch zum Empfangen von Gütern aufweisen, Mittel enthalten zur Ein- und Auskopplung von Transportfahrzeugen in und aus dem Transportnetz wird während des Be- und Entladens und auch während des Verzögerns und Beschleunigens des Transportfahrzeuges der Verkehr im übrigen Transportnetz nicht behindert. Die in den Stationen vorgesehenen Plätze zur Be- und Entladung der Transportfahrzeuge können vorteilhafterweise Mittel enthalten zur Ankopplung an kompatible Einrichtungen anderer Verkehrsträger, wodurch der technische und organisatorische Aufwand für den Anschlußtransport von Gütern erheblich reduziert wird, beispielsweise wenn Stückgüter aus dem Transportdienstleistungssystem in den Straßenverkehr-/LKW-Transport verbracht werden sollen.

Hinsichtlich der Sicherheit des Transportdienstleistungssystems ist es vorteilhaft, in den Stationen Mittel vorzusehen um Transportfahrzeuge gesichert stillzusetzen, die bei der Einkopplung in das Transportnetz nicht einem Sollzustand entsprechen, beispielsweise ein vorgegebener Bewegungszustand. Dies kann beispielsweise dadurch implementiert werden, daß das Bewegungsverhalten des Transportfahrzeuges auf einer in der Station vorhandenen Leitungsstrecke zur Einkopplung des Fahrzeuges durch in der Station vorhandene Sensorik erfaßt wird.

Die Be- und Entladekapazität der Stationen wird deutlich erweitert dadurch, daß für die Transportfahrzeuge in den Stationen Speicherplätze und Rangiereinrichtungen enthalten sind und die Stationen ein internes Transportnetzwerk und Leitungsverzweigungen aufweisen.

Die analog zu den Stationen aufgebauten Depots unterscheiden sich wesentlich auch darin, daß das in den Depots enthaltene Transportnetzwerk weiter verzweigt ist und die Anzahl der Speicherplätze höher ist. Ferner sind neben oder anstelle der Be- und Entladevorrichtungen Reparatur- und Wartungsplätze vorgesehen.

Dadurch, daß die Stationen Aktorik und Sensorik aufweisen und die in den Stationen vorgesehenen Informationsverarbeitungsmittel Mittel aufweisen zur Steuerung, Datenverarbeitung und zur Kommunikation mit anderen Systemteilen und/oder einem Bediener, können die Stationen einen Teil des Steuerungsaufwandes übernehmen und auch zusätzliche Sicherheitsfunktionen eigenständig durchführen. Dabei ist es ferner vorteilhaft, die in den Stationen vorhandenen Übertragungsmittel mit Mitteln auszustatten, die eine Kommunikation zwischen Transportfahrzeug und Bediener ermöglichen, insbesondere wenn das Transportfahrzeug in einem in der Station dafür vorgesehenen Speicherplatz verweilt und auch die ereignisgebundene drahtlose Kommunikation (lokale Mobilkommunikation) mit durchfahrenden Transportfahrzeugen.

Die in den Stationen vorhandenen Informationsverarbeitungsmittel können dahingehend vorteilhaft weitergebildet werden, daß sie zum einen Funktionen zur gesicherten Stillsetzung von Transportfahrzeugen gewährleisten, welche beim Einkoppeln aus der Station in das Transportnetz nicht einen vorgegebenen Bewegungszustand erreicht haben, beispielsweise auf einer Einkopplungsstrecke im stationseigenen Leitungsnetz; zum anderen können die stationseigenen Informationsverarbeitungsmittel so erweitert werden, daß sie zusammen mit in den Stationen eigens dafür vorgesehenen technischen Einrichtungen eine vorübergehende Bypaßumlenkung und/oder eine prioritätsabhängige Zwischenspeicherung durchführen, wodurch eine Begrenzung oder Reduzierung der Wartezeit von sendebereiten Transportfahrzeugen erreicht wird.

Der Charakter der Transportfahrzeuge als eigenständig agierende Subsysteme wird technisch vorteilhaft dadurch unterstützt, daß die im Transportfahrzeug enthaltenen Informationsübertragungsmittel drahtlose Kommunikation, z.B. Infrarot- oder Mobilfunktechnologie, aufweisen, und die Individualfortbewegungsmittel des Transportfahrzeugs Mittel enthalten zur Traktion, zur Energieübertragung, zum Antrieb und zur Bremsung. Als Gegenstück enthält das Transportnetzwerk neben der Sensorik ebenfalls Mittel zur Traktion und zur Energieübertragung.

Verschiedene Ausführungsformen für die Traktionsmittel können etwa Radschinekopplung oder Radfahrbahnkopplung mit Leitlinienführung sein, oder auch Magnetschwebetechnologie beinhalten. Die Mittel zur Energieübertragung können auf einem ohmschen oder induktiven Wirkungsprinzip beruhen, besonders einfach durch Stromabnehmer realisiert sein. Die Antriebsmittel der Transportfahrzeuge können auf der Basis von elektromagnetischen Rotations- oder Linearantrieben beruhen.

Für die Realisierung des Transportnetzes ist es vorteilhaft, im Netz von geschlossener Topologie Mittel vorzusehen zur Ankopplung an weitere Transportsysteme, um das räumliche Einzugsgebiet zur Durchführung von Transportdienstleistungen zu erweitern. Dabei kann das anzukoppelnde Transportsystem vom gleichen Typ sein wie die vorliegende Erfindung.

Das Transportnetz, das sinnvollerweise entlang des gesamten Leitungsnetzes mit Einrichtungen zur Führung von Transportfahrzeugen und zur Bereitstellung von Elektroenergie ausgerüstet ist, ist vorteilhafterweise hinsichtlich der vorhandenen Informationsübertragungsmittel dahingehend ausgestaltet, daß zur leitungsgebundenen Übertragung ein Local Area Network (LAN) und/oder ein Wide Area Network (WAN) vorgesehen sind, sowie ein drahtloses Kommunikationsnetz, etwa ein Mobilfunknetz. Die im Netzwerk vorhandenen Führungs- und Lenkmittel können alternativ oder in Verbindung mit Transportfahrzeug-eigenen Lenkmitteln vorgesehen sein/eingesetzt werden.

Um das Transportnetz noch effizienter nutzen zu können, ist es vorteilhaft, das Transportnetz mit Doppelleitungen zu versehen, die im Gegenverkehr betrieben werden können. Dabei ist es vorteilhaft, zwischen den Doppelleitungen Einrichtungen vorzusehen, die den Wechsel eines Transportfahrzeuges von einem Leitungszweig der Doppelleitung zum anderen ermöglichen. Neben den Doppelleitungen können im Transportnetz auch eine oder mehrere Ringleitungen, gegebenenfalls mit Abzweigungen, enthalten sein, welche in einzelnen oder allen der besagten Stationen räumlich zusammengeführt werden.

Zur Koordination der dezentralen, verteilten Informationsverarbeitungsmittel und zur Überwachung des Verkehrs der Transportfahrzeuge, und gegebenenfalls deren Lenkung, ist es vorteilhaft, weitere, zentrale Informationsverarbeitungsmittel im Transportdienstleistungssystem vorzusehen. Diese Mittel können auch zentrale Funktionen der Transportlogistik realisieren. Dadurch, daß die Informationsverarbeitungsmittel des Transportdienstleistungssystems Mittel enthalten zur Festlegung des Gütersende- und/oder - empfangszeitpunktes mit entsprechender Steuerung des Verkehrs der Transportfahrzeuge wird es ermöglicht, daß außer der grundsätzlich vorgesehenen Spontanauskopplung von Transportfahrzeugen aus den Stationen beim Auftreten eines Sendewunsches ebenso eine Absendung zu vom Dienstauftraggeber definierten Zeitpunkten vorgenommen werden kann, wobei wahlweise die Sende- oder Empfangszeit an durch die Transportfahrzeuge transportierten Gütern bzw. der Transportfahrzeuge selbst festgelegt werden kann.

Für den praktischen Einsatz des Systems ist es vorteilhaft, in die im Transportdienstleistungssystem vorhandenen Informationsverarbeitungsmittel zur Auftragsabwicklung solche Mittel vorzusehen, die Funktionen der Kommissionierung, Dienstleistungserbringung und der Abrechnung bereitstellen und außerdem Mittel vorsehen, die das Zeitverhalten der im Transportdienstleistungssystem enthaltenen Fahrwegsteuerung an die vorgegebene globale Fahrtgeschwindigkeit kontinuierlich anpassen.

Eine einfache und vorteilhafte Ausführung der im Transportdienstleistungssystem enthaltenen Informationsübertragungsmittel sieht vor, als Backbone ein privates oder ein öffentliches Datenkommunikationsnetz mit Internetzugang einzusetzen.

Praktisch kann das Transportnetz mindestens stückweise als Fahrrohrleitung ausgeführt sein, wobei diese Fahrrohrleitung aus einzelnen Rohren bzw. Rohrsegmenten aufgebaut sein kann. Diese Rohre oder Rohrsegmente können aus Beton, aus Stahlbeton, aus Spannbeton oder aus anderen Rohrwerkstoffen, wie beispielsweise Glasfaserkunststoff (GfK) gefertigt sein.

Für den Aufbau eines solchen Systems in der Praxis ist es vorteilhaft, wenn die einzelnen Rohre, aus denen die Fahrrohrleitung aufgebaut ist, aus einem Startschacht heraus in geschlossener Bauweise vorgetrieben sind.

Alternativ zur Möglichkeit, die einzelnen Rohre der Fahrrohrleitung industriell vorzufertigen und diese für den Aufbau des Systems durch Zusammensetzen zu verwenden, ist es, die Fahrrohrleitung oder einzelne Rohre der Fahrrohrleitung unter Verwendung der Tübbingbauweise zu realisieren, unter Verwendung von Stahlbeton, Stahlfaserbeton und duktilem Guss.

Im Falle industrieller Vorfertigung von Rohren bzw. Rohrsegmenten der Fahrrohrleitung ist es vorteilhaft, diese werksseitig mit Haltevorrichtungen auszustatten. Diese können besonders vorteilhaft als radial oder in Rohrlängsrichtung angeordnete, oberflächenbündig zum Rohr einbetonierte Ankerschienen oder Ankerplatten realisiert sein. Diese ermöglichen in vorteilhafter Weise die Fixierung der für den Betrieb der Transportfahrzeuge erforderlichen Einbauten wie Führungsschienen, Stromabnehmer, Dämpfungselemente zur Reduzierung des Körperschalls, Signalleitungen usw. in einem gesonderten Arbeitsgang entweder bei der Herstellung der Rohre bzw. Rohrsegmente oder nach Abschluss der Installation der Rohre im Transportsystem.

Besonders vorteilhaft ist es, diese Rohre bereits werksseitig mit den für den Betrieb der Transportfahrzeuge erforderlichen Einbauten zu versehen. Dabei kommen die vorgenannten Arten von Einbauten in Betracht.

Weiterhin ist es vorteilhaft, die einzelnen Rohre der Fahrrohrleitung mit Mitteln auszustatten, die bei der Montage helfen, Fehler zu vermeiden. Solche Mittel können dazu geeignete Markierungen und Steckkopplungen enthalten.

Für die praktische Realisierung des System bedeutend ist dabei, Mittel vorzusehen, die es ermöglichen, zur Kontrolle der Einbauten, der Steckkopplungen und von anderen Kontakten, einen Funktionstest durchzuführen. Dies ist besonders vorteilhaft, wenn die Mittel derart ausgestaltet sind, dass ein Funktionstest noch vor der endgültigen Montage eines Rohres bzw. Rohrsegmentes erfolgen kann, beispielsweise bevor es vorgetrieben wird.

Eine weitere praktische Ausführungsform sieht vor, abweichend von der Variante eine Fahrrohrleitung als Einzelleitung zur Aufnahme eines Fahrweges auszuführen, die Fahrrohrleitung als Mehrfachleitung zur Aufnahme von mehr als einem Fahrweg zu realisieren.

Im praktischen Betrieb der Fahrrohrleitung ist es besonders vorteilhaft, die Fahrrohrleitung zur Überwachung der Funktion sowohl des Leitungs-Bauwerkes als auch des Fahrweges selbst, geeignete Einrichtungen in der Fahrrohrleitung zu verwirklichen. Hierzu zählen beispielsweise prüf- und sanierungsfähige Rohrverbindungen, die einer Außerbetriebsetzung des Fahrweges bei Unwichtigkeiten vermeiden sowie Rauch- und Feuermelder, Einspeiseleitungen für brandhemmende Gase und Löschwasser bzw. -mittel.

Weiterhin ist es vorteilhaft, das System dahingehend weiterzubilden, dass die Fahrrohrleitung zur Überwachung der Funktion der Transportfahrzeuge und des Fahrweges Mittel zur automatischen TV-Kamera-Überwachung enthält. Diese kann entweder in einem System aus fest installierten, ständig oder sukzessive aktivierten Kameras, oder aus einigen wenigen, fahrbaren schienengeführten Kameras bestehen.

Ferner können die Transportfahrzeuge dahingehend weitergebildet werden, dass sie Mittel zur Überwachung der Funktion derselben, d.h. der Transportfahrzeuge, und des Fahrweges aufweisen, wie beispielsweise automatische TV-Kameras, die auf den Transportfahrzeugen montiert sind, von wo aus die entsprechenden Informationen drahtlos oder über die Führungs- bzw. Stromschienen an einen zentralen Steuerleitstand übermittelt werden.

Eine weitere vorteilhafte Ausführungsform sieht vor, die einzelnen Rohre der Fahrrohrleitung in den Rohrverbindungen mit Zentrierbolzen auszustatten, mit denen Verrollungen unterbindbar sind und die Rohre exakt zueinander ausrichtbar sind.

Weiterhin können die einzelnen Rohre dahingehend vorteilhaft weitergebildet werden, dass in den Rohrverbindungen Elemente zur höhengerechten Ausrichtung und Justierung enthalten sind.

Die vorliegende Erfindung wird nun anhand mehrerer Figuren beispielhaft erläutert. Es zeigen:
- Fig. 1: eine beispielhafte schematische Darstellung der Struktur einer typischen Station mit Weg- verzweigung,
- Fig. 2: eine schematische Darstellung der Struktur einer Station, die zwei durchgehende kontra- direktional betriebene Leitungen enthält,
- Fig. 3: in schematischer Form die Struktur eines De- pots, das an geeigneten Stellen an das Trans- portnetz integriert sein kann,
- Fig. 4: ein Blockschaltbild des Aufbaus des Fahr- wegsteuerungssystems, hier als Bestandteil einer Station,
- Fig. 5: ein Blockschaltbild des mobilen Fahrzeugsteu- erungssystems der Transportfahrzeuge.

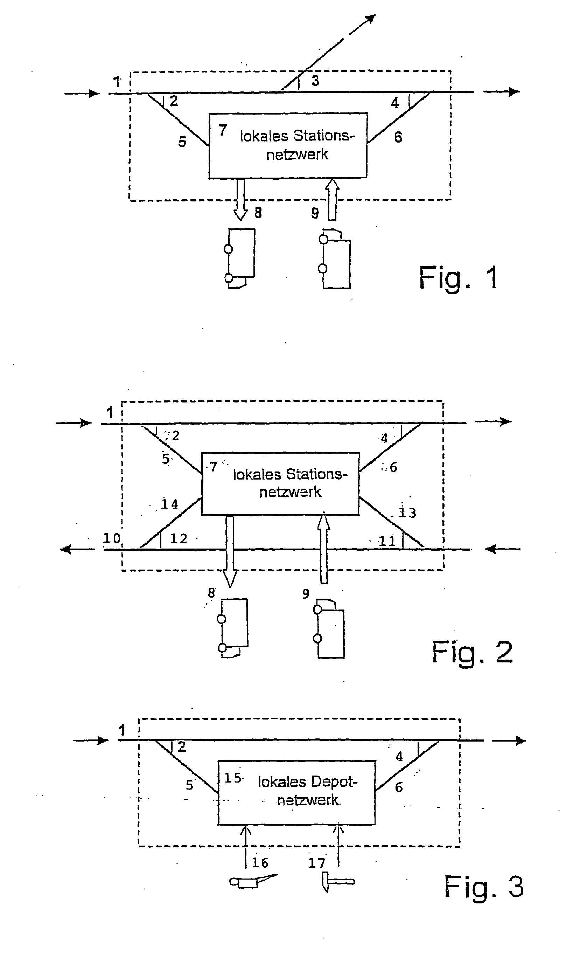

Fig. 1 zeigt beispielhaft eine schematische Darstellung der Struktur einer typischen Station mit Wegverzweigung. In einer durchgehenden Fahrleitung 1 sind drei Kopplungsweichen 2, 3 und 4 enthalten, welche zur Abzweigung von Transportfahrzeugen verwendet werden, etwa bei der Auskopplung von Transportfahrzeugen , der Leitungsverzweigung sowie bei der Einkopplung von Transportfahrzeugen in das Transportnetz. In einem Leitungsabschnitt 5 wird ein aus der Fahrleitung 1 über die Kopplungsweiche 2 ausgekoppeltes Transportfahrzeug verzögert und in umgekehrter Weise auf einem Leitungsabschnitt 6 beschleunigt (Einkopplungsstrecke) und über die Kopplungsweiche 4 in die durchgehende Fahrleitung 1 des Transportnetzwerks eingekoppelt, wobei die Beschleunigung auf der Einkopplungsstrecke so durchgeführt wird, dass die Nominalgeschwindigkeit des Verkehrs auf dem Transportnetz bzw. der durchgehenden Fahrleitung 1 erreicht wird.

Eine solche Fahrleitung 1 des Transportnetzes kann dabei in einem Tunnel realisiert sein, der jeden beliebigen Querschnitt aufweisen kann, etwa kreisförmig oder quadratisch. Mehrere Tunnel können dabei in einen baulichen Zusammenhang gebracht werden, etwa dadurch, dass beide in demselben zusammenhängenden Betonbauwerk über- oder nebeneinander angeordnet sind. Es können dabei auch mehrere Fahrleitungen in einem Tunnel enthalten sein.

Die Leitungsabschnitte 5 und 6 sind über ein kleines lokales Stationsnetzwerk 7 verbunden, in dem Transportfahrzeuge in verschiedenen Zweigen geordnet und abhängig von ihrem Zustand, beispielsweise leer oder beladen, zwischengespeichert, mittels nicht näher dargestellten Rangierweichen umgruppiert, durch das lokale Stationsnetzwerk 7 bewegt und zur Wiedereinkopplung in das Transportnetz bereitgestellt werden. Innerhalb des lokalen Stationsnetzwerkes 7 sind Beund Entladeplätze 8, 9 vorgesehen, auf denen die in den Transportfahrzeugen befindlichen Ladungen im Ruhezustand der Transportfahrzeuge entnommen und auf andere Verkehrsträger, z.B. LKW, umgeladen werden können oder von anderen Verkehrsträgern Ladungen entgegengenommen und in die Transportfahrzeuge umgeladen werden können.

Die Kopplunsweiche 3 dient zur Leitungsverzweigung im Transportnetz und ist hier als logisch zum Stationssystem gehörend dargestellt; ist in diesem Bereich keine Leitungsverzweigung des Transportnetzes erforderlich, so kann diese selbstverständlich entfallen. Nicht näher dargestellt sind die in der Station befindlichen Einrichtungen zur Notauskopplung von Transportfahrzeugen, die sich nicht bestimmungsgemäß verhalten, insbesondere die auf der Einkopplungsstrecke 6 nicht die vorgegebene Geschwindigkeit erreichen.

In Fig. 2 ist eine Station dargestellt, die zwei durchgehende, kontradirektional betriebene Fahrleitungen 1 und 10 enthält. Analog zur in Fig. 1 dargestellten Station enthält die Station in diesem Fall jeweils zwei Kopplungsweichen 2 und 11 für die Auskopplung sowie zwei Kopplungsweichen 4 und 12 für die Einkopplung. Dementsprechend sind jeweils zwei Brems- bzw. Auskopplungsstrecken 5 und 13 und jeweils zwei Beschleunigungs- bzw. Einkopplungsstrecken 6 und 14 vorgesehen. Auch diese Leitungsabschnitte sind mit dem lokalen Stationsnetzwerk 7 verbunden, in dem die aus verschiedenen Richtungen kommenden Transportfahrzeuge abhängig von ihrem Zustand zwischengespeichert, umgruppiert, durch das lokale Stationsnetzwerk 7 bewegt und zur Wiedereinkopplung in das Transportnetz bereitgestellt werden.

Weitere, nicht näher dargestellte und im lokalen Stationsnetzwerk 7 enthaltene Rangierweichen ermöglichen darüber hinaus, Transportfahrzeuge bedarfsweise von einer Fahrleitung nach kurzem Stillstand in die entgegengesetzt betriebene Leitung umzulenken. Sind die Transportfahrzeuge für einen reversierbaren Betrieb ausgelegt, reduziert sich dabei der anlagenseitige Realisierungsaufwand deutlich. Ferner verfügt das Stationsnetzwerk 7, analog zu dem in Fig. 1 gezeigten, über die besonderen Plätze 8 und 9 zur Entladung von Transportfahrzeugen und Ladungsübergabe bzw. - übernahme an bzw. von einem anderen Verkehrsträger und zur Beladung eines Transportfahrzeuges.

Fig. 3 zeigt in schematischer Form die Struktur eines Depots, welches an geeigneten Stellen im Transportnetz vorhanden ist und die zur Aufnahme bzw. Abgabe von Transportfahrzeugen, also zur Zwischenspeicherung, sowie für Wartungs- und Reparaturarbeiten an Transportfahrzeugen dienen. Die in dieser Figur dargestellte Ausführungsform ist analog zur Ausführung der Station in Fig. 1, jedoch ohne Kopplungsweiche 3 zur Leitungsverzweigung. Das Depot weist hier die Fahrleitung 1, die Kopplungsweiche 2, die Brems- bzw. Auskopplungsstrecke 5, das lokale Depotnetzwerk 15, die Beschleunigungs- bzw. Einkopplungsstrecke 6 und die Kopplungsweiche 4 auf. Im Vergleich zum lokalen Stationsnetzwerk 7 in Fig. 1 verfügt das lokale Depotnetzwerk 15 in Fig. 3 über eine größere Speicherkapazität. Die interne Struktur besteht aus mehreren parallelen Zweigen, die durch Rangierweichen miteinander gekoppelt sind. Auf besonderen Plätzen 16 und 17 können bedarfsweise Wartungs- und Reparaturarbeiten an Transportfahrzeugen ausgeführt werden.

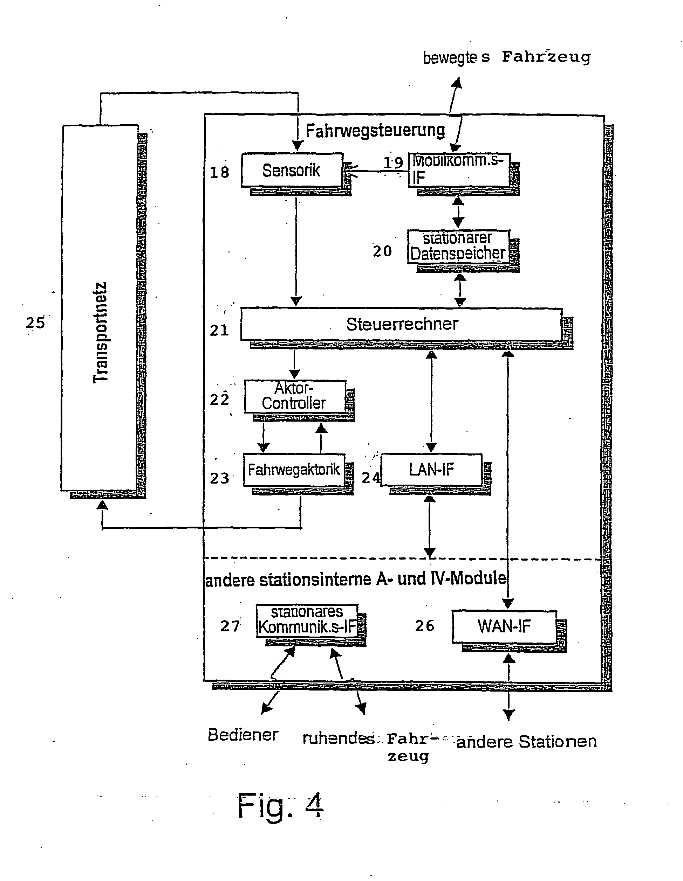

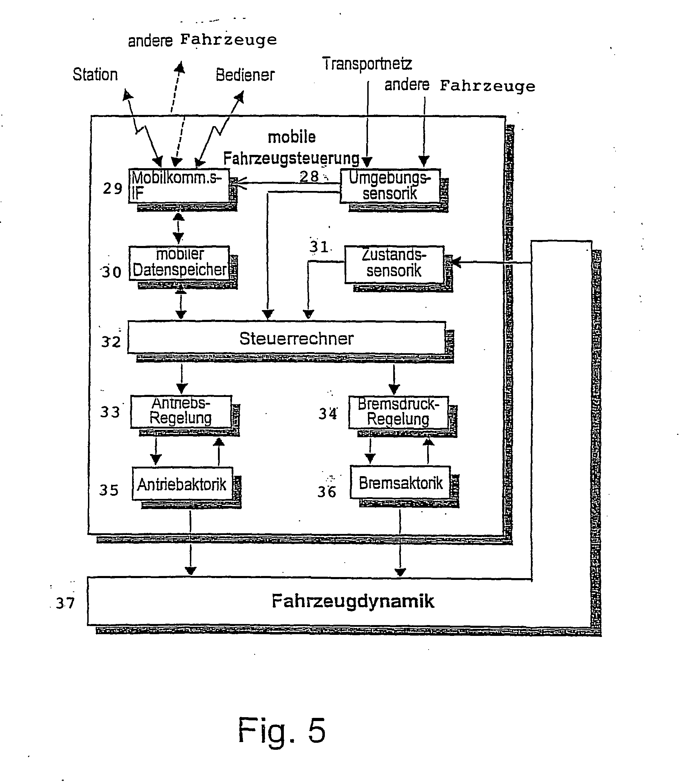

Für Fig. 4 und Fig. 5 wird beispielhaft angenommen, dass die Fahrwegbildung im Transportnetzwerk durch Verstellung von in den Stationen befindlichen Weichen erfolgt, so dass die Fahrwegbildung per Weichenverstellung durch die in den Stationen vorhandene, fest angeordnete, rechnergestützte Automatik gesteuert wird, die ein Teil der in den Stationen befindlichen Informationsverarbeitungsmittel des Transportdienstleistungssystems ist.

Fig. 4 veranschaulicht in Form eines Blockschaltbildes den Aufbau eines Fahrwegsteuerungssystems als Bestandteil der in den Stationen befindlichen Informationsverarbeitungsmittel zur Stationsautomatisierung und lokalen Informationsverarbeitung.

Wird bei Annäherung eines Transportfahrzeuges an die Station über eine Sensorik 18 eine entsprechende Meldung oder ein Ereignis ausgelöst, dann löst dies einen Dialog zwischen der Station und dem sich annähernden Transportfahrzeug aus, der über das drahtlose Mobilkommunikations-Interface 2 geführt wird. Im zunächst vorliegenden Empfangsbetrieb werden vom Transportfahrzeug mitgeführte steuerungsrelevante Daten, die die Zieladresse, den Zustand und weitere Merkmale des Transportfahrzeuges betreffen, von den Informationsverarbeitungsmitteln an Bord des Transportfahrzeugs an die Station übermittelt und auf einen stationären Datenspeicher 20 übertragen. Darauf folgend werden im Sendebetrieb ausgewählte Daten, wie die Adresse und der Zustand der Station, Datum und Uhrzeit vom stationären Datenspeicher 20 über das Mobilkommunikationsinterface 19 an das Transportfahrzeug übertragen. Ein Steuerrechner 21 greift auf die gespeicherten Daten sowie weitere empfangene Umgebungssignale zu, analysiert diese und entscheidet daraufhin, ob dieses Transportfahrzeug ausgekoppelt oder verzweigt werden muss. Dementsprechend wird im Steuerrechner 21 das betreffende Weichensteuerungsmodul aktiviert, welches anhand weiterer von der Sensorik 18 übermittelter Signale und der bekannten Fahrgeschwindigkeit des Transportfahrzeuges die optimalen Zeitpunkte der Weichenumschaltungen bestimmt und entsprechende Befehle an den betreffenden Actorcontroller 22 gibt. Der Actorcontroller 22 realisiert und überwacht die Schaltvorgänge und steht mit der zugehörigen Fahrwegaktorik 23 im Dialog.

Der Steuerrechner 21 steht über ein Local Area Network (LAN)-Interface 24 mit anderen stationsinternen Rechnern im Kommunikationsverbund. Wird von einem solchen weiteren Rechner die Sendebereitschaft eines in der Station befindlichen Transportfahrzeuges an den Steuerrechner 21 gemeldet, dann werden die aus dem Transportnetz 25 aus dem lokalen Umfeld der Station über die Sensorik 18 erhaltenen verkehrsrelevanten Signale analysiert, um zu entscheiden, wann eine kollisionsfreie Einkopplung des Transportfahrzeuges möglich ist. Wird eine solche Situation festgestellt, dann erfolgt eine Aktivierung des im Steuerrechner 21 realisierten Moduls der entsprechenden Kopplungsweiche. Der weitere Ablauf erfolgt dann in der bereits beschriebenen Weise unter Einbeziehung der Komponenten Aktorcontroller 22 und Fahrwegaktorik 23.

Für die wechselseitige Kommunikation der Rechnernetze der einzelnen Stationen ist ein das Transportnetz 25 überdeckendes Informationsübertragungsnetzwerk (Backbone) vom Typ eines Wide Area Network (WAN) vorgesehen. Als Koppelrechner zwischen den lokalen Stationsnetzen (Local Area Network, LAN) und dem Backbone wurde im in Fig. 4 dargestellten Beispiel der Steuerrechner 21 gewählt, der dazu über einen WAN-Interface 26 verfügt.

In Fig. 4 ist weiterhin das in der Station ebenfalls vorhandene stationäre Kommunikationsinterface 27 dargestellt. Dieses stellt als Teil der in der Station vorhandenen Informationsübertragungsmittel dem autorisierten Bediener eine Schnittstelle zur Verfügung, um in den Datenspeicher des in der Station ruhenden Transportfahrzeuges vor dessen Start verkehrs- und dienstleistungsrelevante Daten einzuschreiben bzw. nach der Zielankunft von dort Daten über die Dienstausführung auszulesen.

Fig. 5 veranschaulicht den Aufbau des mobilen Fahrzeugsteuerungssystems als Teil der in den Transportfahrzeugen vorhandenen Informationsverarbeitungsmittel, in Form eines Blockschaltbildes. Im Sinne des Beispielfalles, daß die Fahrwegbildung durch Verstellung von in den Stationen befindlichen Weichen erfolgt, beschränkt sich die Automatisierung der Fahrzeugmobilitätssteuerung darin, daß sie eine Fahrzeuglenkung ausschließt.

Erfolgt bei Annäherung eines Transportfahrzeuges an eine Station über die sogenannte Umgebungssensorik 28 des Transportfahrzeuges eine entsprechende Meldung, so wird ein über die an Bord des Transportfahrzeuges vorhandenen drahtlosen Mobil-Kommunikationsmittel ein Dialog mit der Station initiiert.

Hierbei werden zunächst vom Transportfahrzeug mitgeführte steuerungsrelevante Daten, betreffend die Zieladresse, den Zustand und andere Merkmale des Transportfahrzeugs, im Sendebetrieb über das Mobilkommunikations-Interface 29 auf den Datenspeicher 20 der Station übermittelt und danach in Gegenrichtung von der Station ausgesandte spezifische Daten, wie Adresse und Zustand der Station, Datum und Uhrzeit empfangen und im mobilen Datenspeicher 30 des Transportfahrzeuges abgelegt. Von der Umgebungssensorik 28 werden außerdem fortlaufend Informationen über das vor dem Transportfahrzeug liegende Fahrgebiet, insbesondere in Form von Abstandssignalen, erfaßt. Informationen über den Bewegungszustand des Transportfahrzeuges, besonders dessen Fahrgeschwindigkeit, werden vom Transportfahrzeug selbst kontinuierlich über die Zustandssensorik 31 ermittelt.

Der an Bord des Transportfahrzeuges befindliche Steuerrechner 32 analysiert die sensorisch erfaßten Umgebungs- und Zustandssignale in Bezug auf das vorgegebene Fahrverhalten und entscheidet zwischen den Alternativen einer Geschwindigkeits- oder Abstandsregelung.

Im Fall einer Geschwindigkeitsregelung wird auf eine globale, d.h. für das gesamte Transportdienstleistungssystem vorgegebene, Sollgeschwindigkeit, die im Datenspeicher verwahrt ist, geregelt. Bei der Abstandsregelung ist zunächst der Sollabstand zu berechnen, dessen Wert an die vorliegende Fahrgeschwindigkeit adaptiert wird. Entsprechend der getroffenen Auswahl der zu verwendenden Regelgrößen werden nun Entscheidungen über die notwendigen Maßnahmen in Bezug auf den Motor-, Generator- oder Bremsbetrieb getroffen und die diesbezüglichen Stellgrößenwerte fortlaufend bestimmt. Diese Stellsignale werden entweder der zumeist rechnerextern realisierten Antriebsregelung 33 oder Bremsdruckregelung 34 übermittelt. Diese übernehmen die anlagengerechte Umsetzung der Stellsignale und deren Kontrolle. Dafür stehen die vorgenannten Regelungseinheiten 33 und 34 im Dialog mit der betreffenden Antriebsaktorik 35 bzw. Bremsaktorik 36 des Transportfahrzeuges, die auf den Prozeß der Dynamik 37 des Transportfahrzeuges einwirken.

Das im Transportfahrzeug vorhandene drahtlose Mobilkommunikationsinterface 29 kann etwa auch für den Bedienerdialog mit in der Station ruhenden Transportfahrzeugen zum Zweck des Austauschs verkehrs- und dienstleistungsrelevanter Daten genutzt werden. Über das gleiche oder ein anderes drahtloses Mobilkommunikationssystem kann auch eine Kommunikation zwischen Transportfahrzeugen geführt werden. Diese bildet wiederum eine wesentliche Voraussetzung zur Realisierung fortgeschrittener Funktionen der Fahrzeugsteuerung, z.B. der selbständigen Abstimmung des Fahrzeugverhaltens eines Transportfahrzeuges mit anderen Transportfahrzeugen.

Zum Leistungsumfang des Steuerrechners 32 können weitere Aufgaben gehören, wie beispielsweise die kontinuierliche Berechnung von zusätzlich in die Fahrzeugsteuerung einbeziehbarer verkehrsrelevanter Größen, oder die Ermittlung der momentanen Kapselposition. Möglich sind auch die Nutzung der von anderen Transportfahrzeugen oder Stationen erhaltenen Verkehrsinformation bezüglich des eigenen Verhaltens sowie die Realisierung künstlich intelligenter Verhaltensweisen, etwa die selbstlernende Anpassung des Steuerungsverhaltens des Transportfahrzeuges im Laufe des praktischen Fahrzeugbetriebes.

## Patentansprüche

1. "System zur Durchführung von
Transportdienstleistungen zwischen einer Station (7) zur Güterversendung und mindestens einer weiteren Station (7) zum Güterempfang, bestehend aus einem Transportnetz (25),
Stationen (7,15) mit Mitteln zum Senden und Empfangen von Gütern, fahrerlosen Transportfahrzeugen, Informationsverarbeitungsmitteln zur Steuerung der Transportfahrzeuge und mindestens einem Depot (15) zur Aufnahme und Abgabe von Transportfahrzeugen,
wobei die Informationsverarbeitungsmittel verteilt sind auf Transportnetz (25), Transportfahrzeuge, Stationen (7,15) und Depot,
wobei die in den Transportfahrzeugen enthaltenen Informationsverarbeitungsmittel Mittel (29,30,32) aufweisen zur Steuerung des jeweiligen Fahrzeugs, zur Datenspeicherung und -verarbeitung und zur Kommunikation mit anderen Systemteilen und/oder einem Bediener,
wobei in dem Transportnetz (25), den Transportfahrzeugen, den Stationen (7,15) und dem mindestens einen Depot jeweils
Informationsübertragungsmittel zur Datenkomunikation zwischen den Informationsverarbeitungsmitteln vorgesehen sind,
wobei die Transportfahrzeuge jeweils eine Vorrichtung zur Aufnahme von Gütern aufweisen sowie Sensoren (28,31), Antriebs- und Bremsaktoren (35,36) und Individual-Fortbewegungsmittel enthalten und
wobei jede Station Mittel (2,4,11,12) zum Senden und Empfangen von Gütern aufweist, so dass Gütertransport zwischen je zwei beliebigen Stationen (7) vorgesehen ist,
**dadurch gekennzeichnet, dass** die Transportfahrzeuge als eigenständige, sich selbst steuernde Subsysteme im Sinne mobiler Agentensysteme agieren,
derart, dass ihre Informationsverarbeitungsmittel die sensorisch erfassten, Umgebungs- und Zustandssignalen in Bezug auf das vorgegebene Fahrverhalten
analysieren und zwischen den Alternativen einer Geschwindigkeits- oder Abstandsregelung entscheiden,
dass zur Bestimmung der aktuellen Verkehrssituation durch die Fahrzeuge selbst in den Transportfahrzeugen Mittel (32) zur eigenständigen fortlaufenden Positionsbestimmung enthalten sind und in den Transportfahrzeugen jeweils Mittel (29) enthalten sind zur Kommunikation mit weiteren
Transportfahrzeugen,
wobei die in den Transportfahrzeugen enthaltenen Informationsverarbeitungsmittel Mittel (32) enthalten
zur Anpassung der Geschwindigkeit der
Transportfahrzeuge auf eine für alle Transportfahrzeuge gleiche, vorgegebene Sollgeschwindigkeit und/oder auf die Einhaltung eines Mindestabstandes zwischen jeweils zwei
Transportfahrzeugen durch Einwirken auf die Antriebs-(35) oder Bremsaktoren (36) , wobei das Transportnetz (25) teilweise als Fahrrohrleitung ausgeführt ist.

2. System nach Anspruch 1, **dadurch gekennzeichnet, dass** die in den Transportfahrzeugen enthaltenen Informationsverarbeitungsmittel (32) ein selbstadaptierendes Steuerungsverhalten aufweisen.

3. System nach einem der Ansprüche 1 oder 2, **dadurch gekennzeichnet, dass** die in den Stationen (7,15) vorgesehenen Mittel zum Senden und Empfangen von Gütern Mittel enthalten zur Ein- und Auskopplung (2,4,11,12) von Transportfahrzeugen in und aus dem Transportnetz und zur Be- und Entladung (8,9) von Transportfahrzeugen.

4. System nach einem der Ansprüche 1 bis 3, **dadurch gekennzeichnet, dass** für die Transportfahrzeuge in den Stationen (7,15) Speicherplätze und Rangiereinrichtungen enthalten sind und die Stationen (7,15) ein internes Transportnetzwerk und Leitungsverzweigungen aufweisen.

5. System nach einem der Ansprüche 1 bis 4, **dadurch gekennzeichnet, dass** die Stationen (7,15) Aktoren (23) und Sensoren (18) aufweisen und die in den Stationen (7,15) vorgesehenen Informationsverarbeitungsmittel (19,20,21) Mittel aufweisen zur Steuerung, Datenverarbeitung und zur Kommunikation mit anderen Systemteilen und/oder einem Bediener.

6. System nach Anspruch 1, **dadurch gekennzeichnet, dass** die in den Stationen (7,15) vorhandenen Informationsübertragungsmittel Mittel (19,27) enthalten zur stationären Bedienerkommunikation mit in der jeweiligen Station verweilenden Transportfahrzeugen sowie zur drahtlosen Kommunikation mit durchfahrenden Transportfahrzeugen.

7. System nach einem der Ansprüche 1 bis 6, **dadurch gekennzeichnet, dass** die im Transportnetz (25) vorgesehenen Informationsübertragungsmittel ein Mobilfunknetz und/oder ein leitungsgebundenes lokales Netzwerk und/oder weiträumiges Netzwerk enthalten.

8. System nach einem der Ansprüche 1 bis 7, **dadurch gekennzeichnet, dass** die Fahrrohrleitung als Einzelleitung zur Aufnahme eines Fahrweges ausgeführt ist.

9. System nach einem der Ansprüch 1 bis 7, **dadurch gekennzeichnet, dass** die Fahrrohrleitung als Mehrfachleitung zur Aufnahme von mehr als einem Fahrweg hergestellt ist.

10. System nach Anspruch 9, **dadurch gekennzeichnet, dass** zwischen Doppelleitungen Einrichtungen vorgesehen sind für den Wechsel eines Transportfahrzeugs von einem Fahrweg der Doppelleitung zum anderen.

## Claims

1. System for carrying out transport services between a station (7) for sending goods and at least one further station (7) for receiving goods, comprising a transport network (25),
stations (7,15) having means for sending and receiving goods, driverless transport vehicles, information processing means for controlling the transport vehicles, and at least one depot (15) for taking in and discharging transport vehicles,
the information processing means being distributed over transport network (25), transport vehicles, stations (7,15) and depot,
the information processing means present in the transport vehicles having means (29,30,32) for controlling the respective vehicle, for storing and processing data and for communicating with other parts of the system and/or an operator,
information transmission means for data communication between the information processing means being provided in each case in the transport network (25), the transport vehicles, the stations (7,15) and the at least one depot,
the transport vehicles in each case having a device for picking up goods and including sensors (28,31), drive and braking actuators (35,36) and individual means of locomotion, and
each station having means (2,4,11,12) for sending and receiving goods, so that transport of goods between any two stations (7) is provided, **characterised in that** the transport vehicles act as independent, automatic-control subsystems in the sense of mobile agent systems,
such that their information processing means analyse the sensor-detected environmental and state signals with regard to the preset travelling behaviour and decide between the alternatives of speed or distance regulation,
that, in order to determine the current traffic situation by the vehicles themselves, means (32) for independent continuous position determination are present in the transport vehicles and, for communication with further transport vehicles, means (29) are present in each of the transport vehicles, the information processing means present in the transport vehicles including means (32) for adapting the speed of the transport vehicles to a preset desired speed which is the same for all the transport vehicles and/or to keep a minimum distance between respectively two transport vehicles by acting on the drive or brake actuators (35, 36), the transport network (25) being partly designed as a travel pipeline.

2. System according to Claim 1, **characterised in that** the information processing means (32) present in the transport vehicles exhibit self-adapting control behaviour.

3. System according to one of Claims 1 or 2, **characterised in that** the means, provided in the stations (7,15), for sending and receiving goods include means for coupling (2,4,11,12) transport vehicles into and out of the transport network and for loading and unloading (8,9) transport vehicles.

4. System according to one of Claims 1 to 3, **characterised in that** storage places and shunting devices for the transport vehicles are present in the stations (7,15) and the stations (7,15) have an internal transport network and line branches.

5. System according to one of Claims 1 to 4, **characterised in that** the stations (7,15) have actuators (23) and sensors (18) and the information processing means (19,20,21), provided in the stations (7,15), have means for control, data processing and for communication with other parts of the system and/or an operator.

6. System according to Claim 1, **characterised in that** the information transmission means present in the stations (7,15) include means (19,27) for stationary operator communication with transport vehicles staying in the respective station and for wireless communication with transport vehicles passing through.

7. System according to one of Claims 1 to 6, **characterised in that** the information transmission means provided in the transport network (25) include a mobile radio network and/or a wired local area network and/or wide area network.

8. System according to one of Claims 1 to 7, **characterised in that** the travel pipeline is designed as a single line for accommodating one travel way.

9. System according to one of Claims 1 to 7, **characterised in that** the travel pipeline is produced as a multiple line for accommodating more than one travel way.

10. System according to Claim 9, **characterised in that**, between double lines, there are provided devices for changing a transport vehicle from one travel way of the double line to the other.

## Revendications

1. Système d'exécution de services de transport entre une station (7) destinée à l'expédition de marchandises et au moins une autre station (7) destinée à la réception de marchandises, constitué d'un réseau de transport (25),
de stations (7, 15) avec des moyens d'expédition et de réception de marchandises, de véhicules de transport sans conducteur, de moyens de traitement d'informations pour commander les véhicules de transport et d'au moins un dépôt (15) destiné à recevoir et à délivrer des véhicules de transport,
dans lequel les moyens de traitement d'informations sont répartis sur le réseau de transport (25), les véhicules de transport, les stations (7,15) et le dépôt,
dans lequel les moyens de traitement d'informations contenus dans les véhicules de transport présentent des moyens (29, 30, 32) pour commander le véhicule respectif, mémoriser et traiter des données et communiquer avec d'autres parties du système et/ou un utilisateur,
dans lequel il est prévu respectivement dans le réseau de transport (25), les véhicules de transport, les stations (7, 15) et le au moins un dépôt, des moyens de transmission d'informations pour la communication de données entre les moyens de traitement d'informations,
dans lequel les véhicules de transport présentent respectivement un dispositif de réception de marchandises et des capteurs (28, 31), des actionneurs d'entraînement et de freinage (35, 36) et des moyens de déplacement individuels, et
dans lequel chaque station présente des moyens (2, 4, 11, 12) pour envoyer et recevoir des marchandises de sorte qu'un transport de marchandises soit prévu entre deux stations respectives quelconques (7),
**caractérisé en ce que** les véhicules de transport agissent comme des sous-systèmes autonomes à commande automatique au sens de systèmes d'agents mobiles ,
de sorte que leurs moyens de traitement d'informations analysent les signaux d'environnement et d'état détectés par voie sensorielle par rapport au comportement de conduite prédéfini et décident entre les solutions d'un réglage de vitesse ou d'un réglage de distance,
et que, pour déterminer la situation courante du trafic par les véhicules eux-mêmes, les véhicules de transport contiennent des moyens (32) leur permettant de déterminer leur position de manière autonome et continue et respectivement des moyens (29) leur permettant de communiquer avec d'autres véhicules de transport,
dans lequel les moyens de traitement d'informations contenus dans les véhicules de transport contiennent des moyens (32) pour adapter la vitesse des véhicules de transport à une vitesse théorique prédéfinie identique pour tous les véhicules de transport et/ou au maintien d'une distance minimale entre deux véhicules de transport respectifs par action sur les actionneurs d'entraînement (35) ou de freinage (36), et
dans lequel le réseau de transport (25) se présente en partie sous la forme d'une canalisation tubulaire de transport.

2. Système selon la revendication 1, **caractérisé en ce que** les moyens de traitement d'informations (32) contenus dans les véhicules de transport présentent un comportement de commande à adaptation automatique.

3. Système selon l'une quelconque des revendications 1 ou 2, **caractérisé en ce que** les moyens prévus dans les stations (7, 15) pour envoyer et recevoir des marchandises contiennent des moyens pour engager et dégager (2, 4, 11, 12) des véhicules de transport dans le/du réseau de transport, ainsi que pour le chargement et le déchargement (8, 9) de véhicules de transport.

4. Système selon l'une quelconque des revendications 1 à 3, **caractérisé en ce que**, pour les véhicules de transport, les stations (7, 15) contiennent des emplacements de stockage et des dispositifs de manoeuvre et les stations (7, 15) présentent un réseau de transport interne et des ramifications de canalisation.

5. Système selon l'une quelconque des revendications 1 à 4, **caractérisé en ce que** les stations (7, 15) présentent des actionneurs (23) et des capteurs (18) et les moyens de traitement d'informations (19, 20, 21) prévus dans les stations (7, 15) présentent des moyens permettant de commander, de traiter les données et de communiquer avec d'autres parties du système et/ou un utilisateur.

6. Système selon la revendication 1, **caractérisé en ce que** les moyens de transmission d'informations présents dans les stations (7, 15) contiennent des moyens (19, 27) permettant aux utilisateurs stationnaires de communiquer avec des véhicules de transport séjournant dans la station respective ainsi que de communiquer sans fil avec des véhicules de transport en mouvement.

7. Système selon l'une quelconque des revendications 1 à 6, **caractérisé en ce que** les moyens de transmission d'informations prévus dans le réseau de transport (25) contiennent un réseau de téléphonie mobile et/ou un réseau local câblé et/ou un grand réseau.

8. Système selon l'une quelconque des revendications 1 à 7, **caractérisé en ce que** la canalisation tubulaire de transport se présente sous la forme d'une canalisation unique pour recevoir une voie de circulation.

9. Système selon l'une quelconque des revendications 1 à 7, **caractérisé en ce que** la canalisation tubulaire de transport est aménagée sous la forme d'une canalisation multiple susceptible de recevoir plus d'une voie de circulation.

10. Système selon la revendication 9, **caractérisé en ce qu'**il est prévu entre des doubles canalisations des dispositifs pour permettre le passage d'un véhicule de transport d'une voie de circulation de la double canalisation à l'autre.
